# FASCICULE DE BREVET EUROPEEN

(11) **EP 1 298 464 B1**
(45) Date de publication et mention de la délivrance du brevet: **25.04.2007**
(21) Numéro de dépôt: 02292183.7
(22) Date de dépôt: 05.09.2002
(51) Int. Cl.: G02B 6/036

(54) **Fibre optique silice à double gaine polymere**
Optische Quarzglasfaser mit doppeltem Polymer-Mantel
Silica optical fibre with polymer double cladding

(30) Priorité: 27.09.2001 FR 0112447
(43) Date de publication de la demande: 02.04.2003
(73) Titulaire: Alcatel Lucent, 75008 Paris (FR)
(72) Inventeur: Andrieu, Xavier, 91220 Bretigny sur Orge (FR); Decaumont, Anne, 91220 Bretigny sur Orge (FR); Gasca, Laurent, 91140 Villebon sur Yvette (FR); Provost, Lionel, 91460 Marcoussis (FR); Lempereur, Simon, 94800 Villejuif (FR); Bousselet, Philippe, 91630 Leudeville (FR)
(74) Mandataire: Vigand, Régis Louis Michel

(56) Documents cités:
- EP-A- 0 883 001
- WO-A-01/38244
- US-A- 5 966 491
- PATENT ABSTRACTS OF JAPAN vol. 007, no. 260 (P-237), 18 novembre 1983 (1983-11-18) & JP 58 142304 A (FUJITSU KK), 24 août 1983 (1983-08-24)
- PATENT ABSTRACTS OF JAPAN vol. 1999, no. 05, 31 mai 1999 (1999-05-31) & JP 11 052162 A (MITSUBISHI CABLE IND LTD;MITSUBISHI ELECTRIC CORP), 26 février 1999 (1999-02-26)

## Description

La présente invention concerne le domaine des fibres optiques utilisées pour la transmission et/ou l'amplification de signaux optiques.

Une fibre optique est classiquement constituée d'un coeur entouré d'une gaine optique et protégée par un revêtement. Le coeur a pour fonction de transmettre, et éventuellement d'amplifier, un signal optique, et la gaine optique a pour fonction de confiner le signal optique dans le coeur. A cet effet, les indices de réfraction du coeur n₁ et de la gaine n₂ sont tels que n₁>n₂.

Les fibres optiques utilisées en transmission peuvent être constituées d'un coeur monomode, pour la propagation d'un unique signal optique, ou multimode pour la propagation simultanée de plusieurs signaux optiques. Le caractère monomode ou multimode d'une fibre optique dépend essentiellement de son diamètre de coeur. Les fibres de transmission multimodes sont avantageusement utilisées pour des applications sur courtes distances à débit moyen, c'est à dire de bande passante étroite.

Divers types de fibres de transmission existent répondant à des critères différents de propriétés optiques telles que la largeur de la bande passante et l'atténuation, de coûts, de contraintes de fabrication, et autres. Selon les applications, il est peut être particulièrement important de favoriser la transmission des données sur une large bande passante (haut débit) ou de garantir une atténuation limitée (transmission longue distance).

On a cherché à augmenter la bande passante en réalisant des fibres à gradient d'indice par exemple, ou en réalisant une gaine optique en polymère entourant le coeur en silice (Polymer Clad Silica Fiber, PCSF) mais avec des performances limitées à environ 100 MHz.km pour une fibre PCSF.

Il existe également des fibres optiques plastiques, c'est à dire dont le coeur est composé d'un matériau plastique, et qui présente la particularité d'avoir une très large bande passante. Par exemple, la fibre dite « Lucina » proposée par la société Asahi Glass présente une bande passante supérieure à 500MHz.km contre environ 100MHz.km pour une fibre silice à gradient d'indice. Néanmoins, une telle fibre plastique présente une atténuation importante de l'ordre de 50 à 100 dB/km contre 5 à 10 dB/km pour une fibre PCS décrite précédemment. En outre, une telle fibre optique plastique est coûteuse et vieillie mal.

L'objet de la présente invention est de proposer une nouvelle structure de fibre optique qui permette d'atteindre un compromis entre les avantages procurés par les fibres PCS et les fibres plastiques.

En particulier, la bande passante des fibres plastiques est améliorée de par des défauts situés dans le polymère constituant le coeur multimode de la fibre, ces défauts engendrant des changements de mode des signaux optiques transmis.

En revanche, le plastique atténue considérablement l'intensité du signal transmis, ce qui n'est pas acceptable pour des applications de grande puissance telles que les fibres amplificatrices ou les fibres de transmission longues distances.

Le document JP-58 142 304 propose une fibre optique à large ouverture numérique comprenant une double gaine plastique entourant un coeur en silice. L'indice de réfraction de la gaine intermédiaire en silicone est sensiblement égal à celui du coeur (1,458). L'indice de réfraction (1,405) de la gaine optique extérieure en silicose est inférieur à celui du coeur.

Par ailleurs, les fibres optiques dites « à pompage par la gaine » sont utilisées pour l'amplification et sont généralement constituées de deux coeurs concentriques : un coeur central monomode constitué d'un milieu amplificateur et destiné à la propagation d'un unique signal optique à amplifier, et un coeur multimode, entourant le coeur monomode, utilisé pour la propagation d'un faisceau de pompage. Une gaine optique entoure le coeur multimode. L'indice de réfraction est le plus élevé dans le coeur central et le plus faible dans la gaine. Ainsi, les deux coeurs concentriques se comportent comme des guides d'ondes.

Une fibre optique amplificatrice fonctionne sur le principe dit de l'émission stimulée, selon lequel un matériau peut émettre une onde lumineuse de même longueur d'onde et de même phase que l'onde lumineuse transmise, et cela par excitation dudit matériau au moyen d'une source lumineuse de grande énergie, typiquement un laser de pompage dont la longueur d'onde est inférieure à celle du signal transmis dans la fibre. Les principaux matériaux amplificateurs utilisés sont des ions de terre rare tels que de l'erbium ou de l'ytterbium par exemple, et sont généralement intégrés comme dopants dans le coeur central monomode de la fibre.

Le faisceau de pompage est classiquement émis par un laser à injection apte à émettre un faisceau d'une grande puissance. Le faisceau de pompage se propage dans le coeur multimode de la fibre optique et traverse régulièrement le coeur monomode. L'interaction entre la pompe et le milieu amplificateur d'une part, et entre le signal et le milieu amplificateur d'autre part permet une amplification du signal. Le faisceau signal est ainsi amplifié optiquement par les inversions de populations dues aux absorptions du faisceau de pompage par le matériau amplificateur du coeur central.

L'efficacité de l'amplification est directement liée à l'efficacité du pompage qui est essentiellement conditionnée par l'efficacité du couplage entre le coeur monomode et le coeur multimode.

Or, une des difficultés qui se posent avec les coeurs concentriques cylindriques est que certains rayons lumineux véhiculés par le coeur multimode suivent une trajectoire en hélice autour du coeur monomode sans jamais y pénétrer, c'est à dire sans jamais traverser le matériau amplificateur. L'énergie portée par ces rayons est donc injectée en vain dans la fibre, car elle n'est jamais utilisée pour amplifier le signal transporté dans le coeur monomode.

Ainsi, les fibres optiques à pompage comportent généralement une structure particulière qui leur permet d'accepter davantage de puissance optique de pompage et ainsi d'augmenter l'amplification du signal optique qui est obtenue par absorption d'énergie. Par exemple, pour tenter de résoudre ce problème, il a déjà été proposé, notamment dans le brevet US-A-5 966 491, de former des rainures longitudinales dans la surface externe du coeur multimode, afin de briser les trajectoires en hélice des rayons lumineux et forcer ces derniers à rencontrer l'interface du coeur monomode.

Il est également connu de réaliser une interface de géométrie irrégulière entre le coeur multimode et la gaine optique, telle que cela est décrit dans la demande de brevet WO 01/38244, afin de modifier les trajectoires des signaux optiques et provoquer des changements de modes, ou d'introduire des particules solides dans la gaine optique, telle que cela est décrit dans la demande de brevet EP 1 072 911 A1, afin de perturber mécaniquement les trajectoires des rayons lumineux des signaux se propageant dans le coeur multimode.

La présente invention propose une autre solution pour augmenter le couplage de mode dans une fibre optique amplificatrice.

A cet effet, l'invention propose une fibre optique comprenant une double gaine plastique entourant le coeur. Ainsi, le couplage de mode est assuré par une gaine intermédiaire présentant des inhomogénéités et dont l'indice de réfraction est sensiblement égal à celui du coeur multimode. La seconde gaine optique assure la fonction classique de guidage optique des signaux dans le coeur multimode. Les perturbations introduites dans la gaine intermédiaire sont des perturbations optiques. L'indice de la gaine intermédiaire est en effet sensiblement égale à celui du coeur multimode, les signaux optiques du coeur multimode vont donc se propager également dans cette gaine intermédiaire, mais les inhomogénéités présentes dans cette gaine induisent des variations locales d'indice de réfraction qui modifient les modes de propagation optique des signaux du coeur multimode.

Plus particulièrement, la présente invention se rapporte à une fibre optique comprenant un coeur optique en silice d'indice de réfraction n₁ pour la propagation d'un signal optique, au moins une gaine optique en polymère d'indice de réfraction n₂ avec n₁>n₂, et une gaine optique intermédiaire en polymère située entre le coeur et la gaine optique et ayant un indice de réfraction sensiblement égal à l'indice de réfraction n₁ du coeur, caractérisée en ce que la gaine optique intermédiaire a une épaisseur limitée de manière à éviter une propagation propre d'un ou plusieurs modes optiques du signal, et présente des variations locales de l'indice de réfraction, le coeur optique étant un coeur multimode.

Selon une caractéristique, la gaine optique intermédiaire présente une épaisseur inférieure ou égale à 10 µm.

Selon les modes de réalisation, la gaine optique intermédiaire en polymère hétérogène est composée d'un polymère intrinsèquement inhomogène incluant des variations de densité locales, tel que des réseaux de polyuréthane acrylate, ou d'un alliage et/ou d'un mélange de polymères différents, ou de réseaux de polymères interpénétrés ou semi-interpénétrés, ou d'un polymère contenant des particules transparentes organiques ou inorganiques.

Selon une application, la fibre optique selon l'invention comprend un coeur central monomode en silice d'indice de réfraction n₀ entouré du coeur multimode en silice d'indice de réfraction n1, avec n₀>n1, et constitue un amplificateur optique, le coeur central monomode étant dopé avec un matériau amplificateur.

Les particularités et avantages de la présente invention apparaîtront plus clairement à la lecture de la description qui suit, donnée à titre d'exemple illustratif et non limitatif, et faite en référence aux figures annexées dans lesquelles :

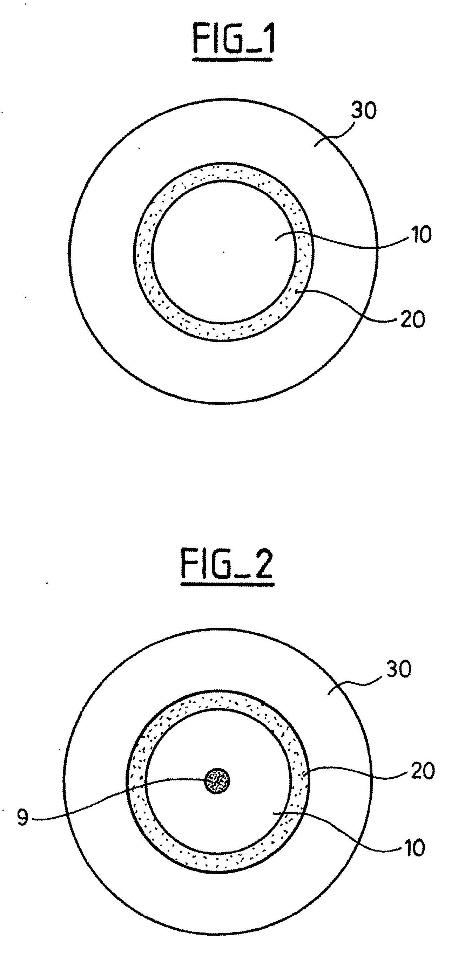

- la figure 1 illustre schématiquement par une vue en coupe transversale d'une fibre optique de transmission selon l'invention ;
- la figure 2 illustre schématiquement par une vue en coupe transversale d'une fibre optique amplificatrice selon l'invention.

La structure de la fibre optique proposée par la présente invention peut être appliquée à une fibre de transmission optique multimode, ou à une fibre amplificatrice.

Une telle fibre est en effet constituée d'un coeur optique multimode 10 en silice d'indice de réfraction n₁ et d'une gaine optique 30 en polymère d'indice de réfraction n₂, avec n₁>n₂. Selon une caractéristique essentielle de l'invention, la fibre comprend en outre une gaine optique intermédiaire 20 en polymère hétérogène, située entre ledit coeur multimode 10 et ladite gaine 30, et ayant un indice de réfraction sensiblement égal à l'indice de réfraction n₁ du coeur multimode.

Les signaux optiques se propageant dans le coeur multimode 10 vont pénétrer dans la gaine intermédiaire 20 puisque l'indice de réfraction n₁ est le même, la gaine intermédiaire 20 ne fait pas office de guide d'onde.

L'épaisseur de la gaine optique intermédiaire 20 doit être choisie limitée de manière à éviter une propagation propre d'un ou plusieurs modes optiques du signal. Par exemple, la gaine polymère intermédiaire présente avantageusement une épaisseur inférieure ou égale à 10µm.

La gaine optique intermédiaire 20 est en polymère hétérogène, c'est à dire présente des inhomogénéités provoquant des changements de mode optique des signaux qui la traversent. Les inhomogénéités de la gaine intermédiaire 20 sont des inhomogénéités qui induisent des effets essentiellement optiques par des variations locales de l'indice de réfraction n₁.

Selon un premier mode de réalisation, la gaine intermédiaire 20 peut, par exemple, être composée d'un polymère intrinsèquement inhomogène incluant des variations de densité locales. Par exemple, les réseaux de polyuréthane acrylate présentent, dans leur structure naturelle, des agglomérats durs (connus sous le terme de « hard cluster » en terminologie anglaise) qui induisent des variations de densité et donc d'indice de réfraction. Ces agglomérats sont généralement répartis de manière aléatoire dans le réseau de polymère et doivent avoir une taille suffisante pour provoquer une réfraction locale de la lumière, soit environ 1/20 de la longueur d'onde de signal transmis. La quantité et la taille des agglomérats peuvent être ajustées par un homme du métier en variant les compositions de résines utilisées pour préparer le polymère de cette gaine intermédiaire 20.

Selon un deuxième mode de réalisation possible, la gaine optique intermédiaire 20 en polymère hétérogène peut être composée d'un alliage et/ou d'un mélange de polymères différents. Un tel mélange peut être effectué à un niveau nanométrique ou micrométrique, selon les polymères choisis par l'homme du métier pour réaliser cette gaine intermédiaire.

Selon un autre mode de réalisation envisageable, la gaine optique intermédiaire 20 en polymère hétérogène peut être composée d'un polymère contenant des particules transparentes organiques ou inorganiques dont la nature, la quantité et la taille peuvent être déterminées par l'homme du métier en fonction des applications.

Selon un autre mode de réalisation possible, la gaine optique intermédiaire 20 en polymère hétérogène peut être composée de réseaux de polymères interpénétrés (connus sous l'acronyme IPN pour Interpenetrating Polymer Network en terminologie anglaise) ou semi-interpénétrés (SIPN). Un réseau interpénétré correspond à un assemblage macromoléculaire d'au moins deux réseaux de polymères partiellement interlacés, et un réseau semi-interpénétré correspond à un assemblage macromoléculaire d'au moins un réseau de polymère avec au moins une chaîne linéaire.

Ces exemples de composition de la gaine intermédiaire en polymère hétérogène ne sont donnés qu'à titre d'exemple illustratif, et d'autres compositions hétérogènes peuvent être envisagées, telles que des polymères en solutions, en émulsions, ou des matériaux thermoplastiques par exemple.

Les exemples décrits ci-dessus pour réaliser la gaine intermédiaire 20 présentent cependant l'avantage de ne pratiquement pas modifier les procédés de fabrication classiques des fibres optiques qui utilisent déjà de tels polymères pour réaliser les revêtements de fibres. Un simple ajout d'une filière supplémentaire permet de réaliser la gaine intermédiaire en ligne lors du fibrage de la fibre optique.

La gaine optique intermédiaire 20 définit dans la présente invention permet avantageusement d'améliorer le couplage des modes optiques se propageant dans le coeur multimode 10. En effet, les défauts optiques, naturels ou ajoutés, dans la gaine intermédiaire 20 en polymère hétérogène permettent de provoquer des changements de mode dans la propagation des signaux optiques transmis par le coeur multimode 10.

Ainsi, dans le cas d'une application aux fibres optiques de transmission, de tels changements de modes optiques de propagations des signaux entraîneront un élargissement de la bande passante de transmission, sans pour autant entraîner une dégradation importante de l'atténuation des signaux optiques transmis. En effet, le coeur de la fibre, dans lequel se propage l'essentiel de l'énergie lumineuse, est composé de silice qui présente de très bonnes propriétés en terme d'atténuation. Une telle fibre est particulièrement adaptée à des applications de réseaux d'accès pour des transmissions haut débit sur des distances moyennes.

De même, dans le cas d'une application aux fibres optiques amplificatrices, c'est à dire dans le cas où le coeur multimode 10 entoure un coeur monomode 9 dopé d'un matériau amplificateur, de tels changements de modes optiques de propagations des signaux entraînera une amélioration de l'efficacité du couplage entre le coeur monomode et le coeur multimode.

## Revendications

1. Fibre optique comprenant un coeur optique (10) en silice d'indice de réfraction n₁ pour la propagation d'un signal optique, au moins une gaine optique (30) en polymère d'indice de réfraction n₂ avec n₁>n₂, et une gaine optique intermédiaire (20) en polymère située entre le coeur (10) et la gaine optique (30) et ayant un indice de réfraction sensiblement égal à l'indice de réfraction n₁ du coeur (10), **caractérisée en ce que** la gaine optique intermédiaire (20) a une épaisseur limitée de manière à éviter une propagation propre d'un ou plusieurs modes optiques du signal, et présente des variations locales de l'indice de réfraction, le coeur optique étant un coeur multimode.

2. Fibre optique selon la revendication 1, dans laquelle la gaine optique intermédiaire (20) présente une épaisseur inférieure ou égale à 10 µm.

3. Fibre optique selon l'une des revendications 1 et 2, dans laquelle la gaine optique intermédiaire (20) est composée d'un polymère intrinsèquement inhomogène incluant des variations de densité locales.

4. Fibre optique selon la revendication 3, dans laquelle la gaine optique intermédiaire (20) est composée de réseaux de polyuréthane acrylate.

5. Fibre optique selon l'une des revendications 1 et 2, dans laquelle la gaine optique intermédiaire (20) est composée d'un alliage et/ou d'un mélange de polymères différents.

6. Fibre optique selon l'une des revendications 1 et 2, dans laquelle la gaine optique intermédiaire (20) est composée de réseaux de polymères interpénétrés ou semi-interpénétrés.

7. Fibre optique selon l'une des revendications 1 et 2, dans laquelle la gaine optique intermédiaire (20) est composée d'un polymère contenant des particules transparentes organiques ou inorganiques.

8. Fibre optique selon l'une des revendications précédentes, comprenant un coeur central monomode (9) en silice d'indice de réfraction n₀ entouré du coeur multimode (10) en silice d'indice de réfraction n₁, avec n₀>n₁.

9. Fibre optique selon la revendication 8, constituant un amplificateur optique, le coeur central monomode (9) étant dopé avec un matériau amplificateur.

## Claims

1. Optical fibre comprising a silica optical core having a refractive index n₁ for the propagation of an optical signal and at least one polymer optical cladding (30) having a refractive index n₂, with n₁>n₂, and a polymer intermediate optical cladding (20) situated between the core (10) and the optical cladding (30) and having a refractive index substantially equal to the refractive index n₁ of the core (10), **characterised in that** the intermediate optical cladding (20) has a thickness that is limited to prevent specific propagation of one or more optical modes of the signal and features local variations in the refractive index, the optical core being a multimode core.

2. Optical fibre according to claim 1, wherein the intermediate optical cladding (20) has a thickness less than or equal to 10 µm.

3. Optical fibre according to claim 1 or claim 2, wherein the intermediate optical cladding (20) is made from an intrinsically non-homogeneous polymer having local density variations.

4. Optical fibre according to claim 3, wherein the intermediate optical cladding (20) is made from acrylate polyurethane networks.

5. Optical fibre according to claim 1 or claim 2, wherein the intermediate optical cladding (20) is made from an alloy and/or from a mixture of different polymers.

6. Optical fibre according to claim 1 or claim 2, wherein the intermediate optical cladding (20) is made from interpenetrating or semi-interpenetrating polymer networks.

7. Optical fibre according to claim 1 or claim 2, wherein the intermediate optical cladding (20) is made from a polymer containing transparent organic or inorganic particles.

8. Optical fibre according to any preceding claim, comprising a silica monomode central core (9) with a refractive index n₀ surrounded by a silica multimode core (10) with a refractive index n₁, with n₀>n₁

9. Optical fibre according to claim 8, constituting an optical amplifier, the monomode central core (9) being doped with an amplifier material.

## Patentansprüche

1. Optische Faser, die einen optischen Kern (10) aus Quarzglas mit einem Brechungsindex n₁ für die Ausbreitung eines optischen Signals, mindestens einen optischen Mantel (30) aus Polymer mit einem Brechungsindex n₂ wobei n₁ > n₂, und einen optischen Zwischenmantel (20) aus Polymer, der zwischen dem Kern (10) und dem optischen Mantel (30) liegt und einen Brechungsindex etwa gleich dem Brechungsindex n₁ des Kerns (10) hat, enthält, **dadurch gekennzeichnet, dass** der optische Zwischenmantel (20) eine beschrankte Dicke hat, so dass eine Eigenausbreitung einer oder mehrerer optischer Moden des Signals verhindert wird, und lokale Schwankungen des Brechungsindexes aufweist, wobei der optische Kern ein multimodaler Kern ist.

2. Optische Faser gemäß Anspruch 1, bei der der optische Zwischenmantel (20) eine Dicke kleiner oder gleich 10µm aufweist.

3. Optische Faser gemäß einem der Ansprüche 1 und 2, bei der der optische Zwischenmantel (20) aus einem an sich inhomogenen Polymer besteht, das lokale Dichtesehwankungen einschließt.

4. Optische Faser gemäß Anspruch 3, bei der der optische Zwischenmantel (20) aus Polyurethanacrylat-Netzwerken besteht.

5. Optische Faser gemäß einem der Ansprüche 1 und 2, bei der der optische Zwischenmantel (20) aus einer Legierung und/oder einer Mischung aus verschiedenen Polymeren besteht.

6. Optische Faser gemäß einem der Ansprüche 1 und 2, bei der der optische Zwischenmantel (20) aus interpenetrierenden oder semi-interpenetrierenden polymeren Netzwerken besteht.

7. Optische Faser gemäß einem der Ansprüche 1 und 2, bei der der optische Zwischenmantel (20) aus einem Polymer besteht, das transparente organische oder anorganische Teilchen enthält.

8. Optische Faser gemäß einem der vorstehenden Anspruche, die einen monomodalen Mittelkern (9) aus Quarzglas mit einem Brechungsindex n₀ enthält, der von dem multimodalen Kern (10) aus Quarzglas mit einem Brechungsindex n₁ umgeben wird, wobei n₀ > n₁.

9. Optische Faser gemäß Anspruch 8, die einen optischen Verstärker bildet, wobei der monomodale Mittelkern (9) mit einem Verstärkermaterial dotiert ist.
